# EUROPÄISCHE PATENTSCHRIFT

(11) **EP 0 779 971 B1**
(45) Veröffentlichungstag und Bekanntmachung des Hinweises auf die Patenterteilung: **10.05.2000**
(21) Anmeldenummer: 95929794.6
(22) Anmeldetag: 04.08.1995
(51) Int. Cl.: G01G 3/14, G01G 23/37

(54) **Wägevorrichtung mit schneller Hysteresekorrektur**
Weighing device with quick hysteresis correction
Dispositif de pesée avec une correction rapide de l'hystérésis

(30) Priorität: 09.09.1994 DE 4432109
(43) Veröffentlichungstag der Anmeldung: 25.06.1997
(73) Patentinhaber: Bizerba GmbH & Co. KG, D-72336 Balingen (DE)
(72) Erfinder: SELIG, Klaus, Peter, D-72379 Hechingen (DE)
(74) Vertreter: Hoeger, Stellrecht & Partner
(86) Internationale Anmeldenummer: EP9503103
(87) Internationale Veröffentlichungsnummer: WO9607876

(56) Entgegenhaltungen:
- EP-A- 0 457 134
- DE-A- 2 919 227
- FR-A- 2 193 476
- FR-A- 2 554 585
- GB-A- 1 479 192
- GB-A- 2 008 773

## Beschreibung

Die Erfindung betrifft eine Wägevorrichtung, insbesondere zur Verwendung in hochauflösenden Waagen, mit einem elastisch verformbaren Kraftaufnehmer, einer Sensoranordnung zur Umwandlung der aufgrund einer auf das Krafteinleitungsteil des Kraftaufnehmers wirkenden Kraft F hervorgerufenen Verformung desselben in ein elektrisches Wägesignal und mit einer Recheneinheit zur Ermittlung eines um den Hysteresefehler des Kraftaufnehmers korrigierten Wägesignals.

Wägevorrichtungen dieser Bauart werden heute in großer Zahl in der eichfähigen und nicht eichfähigen Wägetechnik bis zu Auflösungen von 10.000 Teilungs-Schritten eingesetzt.

Eine bekannte Bauart des Kraftaufnehmers mit Verformungskörper wird bei der Dehnungsmeßstreifen-Wägezelle verwendet, bei der die durch die zu messende Kraft bedingten Dehnungen an der Oberfläche des elastisch verformbaren Kraftaufnehmers mit Hilfe von Dehnungsmeßstreifen in eine Änderung des elektrischen Widerstandes dieser Dehnungsmeß streifen umgesetzt werden. Daneben sind auch kapazitiv arbeitende Sensoranordnungen und solche mit Schwingsaiten bekannt.

Wägevorrichtungen dieser Bauart weisen grundsätzlich Meßfehler auf, die durch die vom idealen Zustand abweichenden elastischen Materialeigenschaften des zur Herstellung des elastisch verformbaren Kraftaufnehmers verwendeten Materials verursacht werden. Diese Meßfehler machen sich insbesondere bei hochauflösenden Waagen bei stoßförmiger Belastung bemerkbar, etwa wenn das Wägegut auf die Waagschale der Waage fallen gelassen wird.

Hierbei äußerst sich ein Hysteresefehler insbesondere dadurch, daß das vom Kraftaufnehmer abgegebene Signal für eine bestimmte Last davon abhängt, ob die der bestimmten Last entsprechende Verformung des Kraftaufnehmers durch Belastung oder Entlastung desselben erreicht wird.

Dieser Fehler ist also auf ein Werkstoffverhalten zurückzuführen, der als "Gedächtniseffekt" bezeichnet werden könnte.

Zur Korrektur des Hysteresefehlers sind mathematische Verfahren bekannt, die in der Meßwertverarbeitung der Ausgangsgröße des Kraftaufnehmers angewendet werden.

Beispiele für diese Art der Korrektur der Hysteresefehler geben die britische Patentschrift GB 1479192-B und die europäische Patentschrift EP 0 457 134-A2. Beide Druckschriften offenbaren mathematische Verfahren in Form von Polynomapproximationen, bei denen jeweils in Abhängigkeit der Belastungsrichtung des Wägesystems gespeicherte

Hysteresekorrekturwerte mit dem ermittelten Meßwert verarbeitet und danach als um den Hysteresefehler korrigierter Gewichtswert ausgegeben werden.

Für die mathematische Korrektur des Hysteresefehlers ergibt sich allerdings bei der Realisierung eine technische Schwierigkeit, welche die praktische Nutzung eines solchen Verfahrens bisher eingeschränkt hat oder gar die Wirkung dieser Verfahren verfälscht. Diese Schwierigkeit liegt im zeitlichen Verhalten der elastischen Eigenschaft des elastisch verformbaren Kraftaufnehmermaterials, welches zum Hysteresefehler führt sowie im Zeitverhalten des zum Betrieb des Kraftaufnehmers benötigten Auswerteschaltkreises, insbesondere des dafür häufig verwendeten Analog-Digital-Wandlers begründet.

Es zeigt sich nämlich, daß sich der genannte Gedächtniseffekt des elastisch verformbaren Kraftaufnehmermaterials, der zur Hysterese führt, bei Belastung des Kraftaufnehmers sehr schnell einstellt. Wird beim Anfahren eines bestimmten Belastungszustandes des Kraftaufnehmers dieser Belastungszustand nur für sehr kurze Zeit von weniger als 1 ms überschritten, dann weiß das elastisch verformbare Kraftaufnehmermaterial bereits, daß der sich endgültig einstellende Belastungszustand von oben her, also aus einem Bereich höherer Lasten angefahren wurde und das Ausgangssignal der Sensoranordnung ist unterschiedlich zu dem Fall, in dem der gleiche Lastzustand von unten her, also aus dem Bereich niederer Lasten (entsprechend einer allmählichen Belastung der Waage) angefahren wird. Dieser Unterschied ist der bereits genannte Hysteresefehler. Eine solche Belastungszustandsänderung stellt sich im praktischen Betrieb eines Kraftaufnehmers in einer Waage dadurch ein, daß das Wägegut in vielen Fällen beim Aufbringen auf die Waage einen Stoß verursacht, durch den der Kraftaufnehmer für eine kurze Zeit eine Kraft erfährt, die wesentlich höher sein kann als die statische Gewichtskraft des Wägegutes selbst und die dann Ursache ist für eine Umkehrung des Hysteresewertes von Plus nach Minus oder umgekehrt.

Die genannten Verfahren lassen zwar eine Korrektur eines Hysteresefehlers in einem sogenannten "quasistatischen" Betrieb zu. Bedingt insbesondere durch die langen Wandlungszeiten der üblichen Analog-Digital-Wandler ist es jedoch in Betriebsarten mit stoßartiger Belastung beim Aufbringen der Last auf eine Wägevorrichtung mit sehr kurzzeitigen Laständerungen nicht möglich, den Hysteresefehler sicher zu erfassen. Diese Betriebsweise mit den stoßartigen Belastung ist jedoch im praktischen Betrieb von Waagen als der Normalfall anzusehen.

Darüberhinaus ist mit bekannten Maßnahmen, wie etwa die Auswahl eines geeigneten Material zur Herstellung des elastisch verformbaren Kraftaufnehmers sowie die Einstellung eines bestimmten Werkstoffzustandes nicht ausreichend, um den Hysteresefehler so zu verkleinern, daß er bei höher auflösenden Waagen vernachlässigbar wird.

Aufgabe der Erfindung ist es deshalb, eine Wägevorrichtung der genannten Art so weiterzubilden, daß eine Korrektur des Hysteresefehlers auch bei den in der Praxis vorkommenden kurzzeitigen Laständerungen in hochauflösenden Waagen mit akzeptablem Aufwand realisierbar ist.

Diese Aufgabe wird erfindungsgemäß dadurch gelöst, daß die Sensoranordnung eine erste Prüfeinheit zur hochaufgelösten Erfassung des Wägesignales und eine zweite Prüfeinheit zur zeitlich hochaufgelösten Erfassung des Wägesignals umfaßt, wobei die Recheneinheit anhand von von der zweiten Prüfeinheit bereitgestellten Daten das hochaufgelöste Wägesignal der ersten Prüfeinheit um den Hysteresefehler korrigiert.

Für den Betrieb von Kraftaufnehmern der genannten Bauart zur Digitalisierung der Meßgröße, sprich Wägesignal werden häufig Analog-Digital-Wandler mit Auflösungen im Bereich von 16 bis 20 bit (entsprechend etwa 65.000 bis 1.000.000 Schritten) verwendet, welche typischerweise Wandlungszeiten von 10 bis 50 ms benötigen. Zur Korrektur des Hysteresefehlers in der Meßwertverarbeitung ist angesichts der bereits innerhalb von 1 ms eintretenden Gedächtniseffekts des Kraftaufnehmermaterials eine Wandlungszeit im Bereich von 10 bis 50 ms unakzeptabel. Bei einer solchen Wandlungszeit ist die für eine Korrektur des Hysteresefehlers in der Meßverarbeitung notwendige Erfassung der Belastungsrichtung, in der der endgültige Lastzustand erreicht wird, nicht realisierbar.

Die Erfindung schlägt hierzu vor, in der Sensoranordnung neben einer ersten Prüfeinheit, die, wie bislang üblich, der hochaufgelösten Erfassung des Wägesignales dient, eine zusätzliche zweite, zeitlich hochauflösende Prüfeinheit vorzusehen, welche zur Erfassung der elastischen Verformung des Kraftaufnehmers verwendet wird. Die Recheneinheit kann dann die von der zweiten Prüfeinheit erhaltenen wichtigen Daten, die den Verlauf des einzelnen Wägeprozesses dokumentieren, mit verarbeiten, das heißt die Recheneinheit erlangt durch die Daten der zweiten Prüfeinheit Kenntnis von der Belastungsrichtung, in der der endgültige Lastzustand erreicht wird.

Es hat sich herausgestellt, daß die zeitlich hochaufgelöste Erfassung der elastischen Verformung des Kraftaufnehmers als Basis für die Hysteresekorrektur mit 1% Fehler behaftet bereits ausreichend genau ist. Dies bedeutet, daß bereits eine 8-bit-Auflösung des Wägesignals bei der zeitlichen Erfassung des Wägevorganges ausreichend ist. Bei lediglich mit 8 bit auflösenden Analog-Digital-Wandlern kann man leicht mit Wandlungszeiten unter 1 ms arbeiten, während andererseits für die hochauflösende Erfassung des Wägesignales weiterhin mit der bekannten langsameren ersten Prüfeinheit gearbeitet werden kann, wobei Wandlungszeiten bis zu 50 ms für den reinen Wägevorgang selbst völlig ausreichend sind.

Eine etwas genauere Abschätzung bezieht die Ausbreitungsgeschwindigkeit von stoßartigen Verformungen in Festkörpern ein, welche gleich der Schallgeschwindigkeit in dem Festkörpermaterial ist. Damit gelangt man zu einer unteren Grenze für die zeitaufgelöste Erfassung der Verformung des Kraftaufnehmers von circa 50 µs bei einem Material wie Stahl oder Aluminium und einer Länge des Kraftaufnehmers von 100 mm. Hierbei geht eine Schallgeschwindigkeit von circa 3.000 m/s in die Berechnung mit ein, und die Zeitauflösung von circa 50 µs gibt den maximalen Zeitabstand zwischen zwei Meßpunkten an.

Als mathematisches Auswerteverfahren wird bevorzugt ein Verfahren nach Preisach verwendet, welches in der Zeitschrift für Physik, Band 94, Seite 277 ff (1935) beschrieben ist. Hierbei handelt es sich um ein allgemeines physikalisch-mathematisches Modell zur Beschreibung der magnetischen Hysterese bei ferromagnetischen Materialien, das sich jedoch auf die Hysterese bei der elastischen Verformung von Kraftaufnehmer wie folgt anwenden läßt:

Das Konzept des Preisach-Modells besteht darin, das Hystereseverhalten eines physikalischen Systems durch eine Vielzahl von "Elementarhysteresen" mit rechteckiger Hystereseschleife nachzubilden. Dieses Modell ist nicht auf die Beschreibung magnetischer Hysteresen beschränkt, sondern eignet sich auch zur modellförmigen Erfassung anderer physikalischer Systeme, die eine Hysterese aufweisen, wie der hier diskutierte elastisch verformbare Kraftaufnehmer.

Beim Preisach-Modell der Hysterese wird das physikalische System durch die Gesamtheit der genannten "Elementarhysteresen" beschrieben. Diese Elementarhysterese können abhängig von der Eingangsgröße des Systems zwei Zustände einnehmen. Welcher dieser Zustände eingenommen wird, ist abhängig vom Wert der Eingangsgröße des Systems sowie von den Schaltschwellen dieser Elementarhysteresen.

Die Beschreibung eines physikalischen Systems durch dieses Modell ermöglicht durch die dem Modell eigenen mathematischen Algorithmen eine rechnerische Korrektur von Hystereseeffekten. In einer verbesserten Version des Preisach-Modells ist eine für die praktische Anwendung wichtige, wesentlich effizientere Berechnung und Korrektur der Hystereseeffekte möglich (vgl. M. Haas, Reduzierung von Hysteresefehlern bei Sensoren durch rechnergestützte Signalverarbeitung, Institut für Meß- und Automatisierungstechnik der Universität der Bundeswehr, München, 1993). In diesem verbesserten Modell ist zur Beschreibung des Hystereseverhaltens nur die Kenntnis der Grenzlinien zwischen Elementarhysteresen mit unterschiedlichen Zuständen notwendig. Der mit diesem Modell zur rechnerischen Korrektur der Hysterese notwendige Speicherbedarf ist durch die Beschränkung der Kenntnis des Hystereseverhaltens auf die Grenzlinien wesentlich verringert. Dadurch wird es möglich, die genannte rechnerische Korrektur von Hystereseeffekten auch mit Hilfe preisgünstiger Microcontroller durchzuführen.

Die Grenzlinien beziehungsweise die minimalen und maximalen Werte der Zug-Dehnungs-Kurve für den elastisch verformbaren Kraftaufnehmer hängen vom Typ, das heißt der Geometrie des Biegekörpers des Kraftaufnehmers und dem zugelassenen Lastbereich sowie natürlich des verwendeten Materials ab. Im Falle einer Messung ist es nun ausreichend, bei Kenntnis der Materialeigenschaften jeweils nur die zuletzt erreichten minimalen und maximalen Belastungszustände des Kraftaufnehmers abzuspeichern, um klar definieren zu können, wo sich das System innerhalb der Grenzlinien der Minimal- und Maximalwerte der Zug-Dehnungs-Hüllkurve befindet.

Wie bereits zuvor ausgeführt, erzeugt die Sensoranordnung vorzugsweise ein analoges Wägesignal, wobei die erste und die zweite Prüfeinheit jeweils einen unabhängig voneinander arbeitenden Analog-Digital-Wandler umfassen, welche das Wägesignal, welches ja der Verformung des Kraftaufnehmers entspricht, unabhängig voneinander auswerten.

Der Analog-Digital-Wandler der ersten Prüfeinheit weist vorzugsweise eine Auflösung von 16 bis 20 bit auf, während der Analog-Digital-Wandler der zweiten Prüfeinheit eine Auflösung von mindestens 8 bit aufweist.

Die Wandlungszeit des Analog-Digital-Wandlers der zweiten Prüfeinheit beträgt vorzugsweise ≤ 50 µs.

Die Wandlungszeit des Analog-Digital-Wandlers der ersten Prüfeinheit, welche das hochaufgelöste Wägesignal bereitstellt, beträgt vorzugsweise ≤ 50 ms.

Bevorzugt umfaßt die zweite Prüfeinheit einen Vorverstärker, welcher das der elastischen Verformung des Kraftaufnehmers entsprechende elektrische Signal verstärkt.

Bei einer bevorzugten Ausführungsform der Erfindung ist vorgesehen, daß der Vorverstärker und der Analog-DigitalWandler der zweiten Prüfeinheit in einem Schaltkreis integriert sind. Dies senkt nicht nur die Herstellkosten, sondern vereinfacht auch die Montage der Anordnung.

Im Hinblick auf die weitere Vereinfachung kann vorgesehen sein, daß der integrierte Schaltkreis zusätzlich einen Datenspeicher und sogar die Recheneinheit integriert enthalten kann und/oder den Digitalteil des Analog-DigitalWandlers der ersten Prüfeinheit.

Im günstigsten Falle ist deshalb neben dem Analog-Digital-Wandler der zweiten Prüfeinheit und dem zugehörigen Vorverstärker sowohl der Datenspeicher als auch die Recheneinheit als auch der Digitalteil des Analog-Digital-Wandlers der ersten Prüfeinheit in einer integrierten Schaltung integriert.

Bei der Wägung wird das hochaufgelöste, korrigierte Wägesignal bei einer Ausführungsform erst dann zur Anzeige freigegeben, wenn die Wägesignalschwankungen für eine vorgegebene Zeit vorbestimmte Grenzen nicht überschreiten.

Die mit der Erfindung erzielbaren Vorteile bestehen insbesondere darin, daß ein Wägesystem, das im rauhen Betrieb harten Stößen mit kurzzeitigen Laständerungen ausgesetzt ist, trotzdem mit einer zuverlässigen Hysteresekorrektur ausgestattet werden kann und daß deren Funktion durch die Aufteilung in zwei Meßkanäle mit Analog-Digital-Wandlern mit heute technisch machbaren Wandlungsraten überhaupt ermöglicht ist.

Bei den für den Betrieb einer solchen Wägevorrichtung notwendigen Analog-Digital-Wandlern handelt es sich wegen der erforderlichen hohen Auflösung von 16 bis 20 bit entsprechend 65.000 bis 1.000.000 Schritten um Wandler mit einem integrierenden Verfahren. Solche Wandler haben prinzipbedingt lange Wandlungszeiten zwischen 10 und 50 ms, was für den normalen Betrieb des Wägesystems ausreichend ist, jedoch nicht für die Erfassung der Daten, die für die genannte Korrektur des Hysteresefehlers relevant sind.

Für die zur Hysteresekorrektur andererseits notwendige Information über die Belastungsrichtung ist eine Auflösung von 7 bis 8 bit entsprechend 128 bis 264 Schritten völlig ausreichend, so daß hier ein sehr schnell arbeitender Analog-Digital-Wandler etwa nach dem bekannten Verfahren der sukzessiven Approximation eingesetzt werden kann. Eine solcherart aufgebaute Wägevorrichtung wird im folgenden beispielhaft beschrieben. Es zeigen:
- Figuren 1a und 1b :: Diagramme mit charakteristischer Hysteresefehlerkurve der Analogmeßwerte eines Kraftaufnehmers;
- Figur 2 :: ein Ausführungsbeispiel der Erfindung im Blockschaltbild.

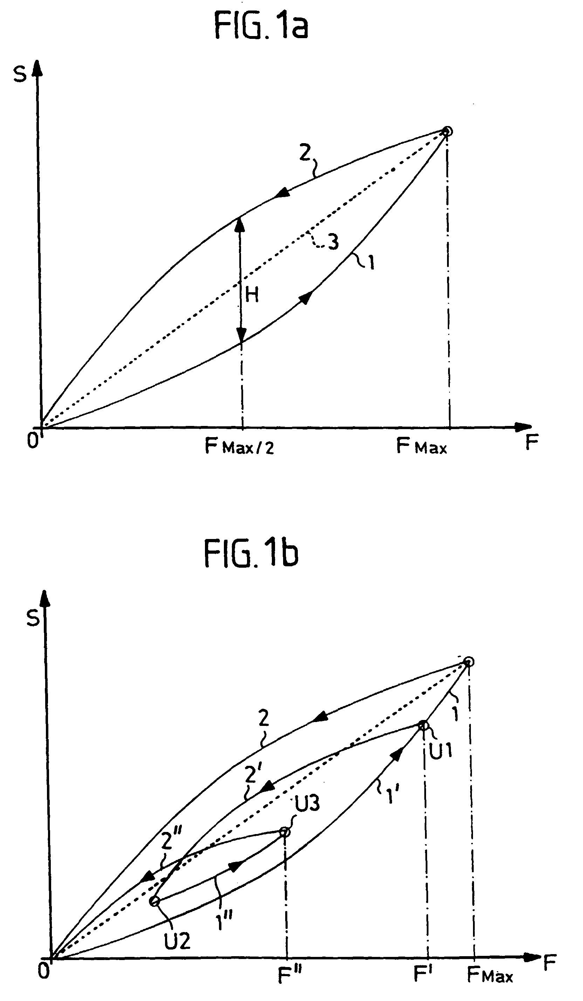

In Figur 1a ist die von einem Kraftaufnehmer 4 einer Wägevorrichtung abgegebene analoge Meßgröße S als Funktion der Last F aufgetragen. Erhöht man bei einer solchen Wägevorrichtung die Last etwa vom Wert Null zur maximalen Last FMax und reduziert die Last anschließend wieder auf Null, so zeigen sich deutliche Unterschiede zwischen der Belastungskurve 1 und der Entlastungskurve 2. Die Entlastungskurve 2 liegt in den meisten Fällen oberhalb der Belastungskurve 1. Die Entlastungskurve 2 kann aber auch unterhalb der Belastungskurve 1 verlaufen. Die ideale Belastungskurve eines fehlerfreien Kraftaufnehmers ist als gepunktete Linie 3 eingezeichnet. Der im allgemeinen bei der halben Last FMax/2 maximale Unterschied H ist der besagte Hysteresefehler.

Qualitativ vergleichbare Belastungskurven ergeben sich auch, wenn der Belastungszyklus nicht zwischen der Nullast und der maximalen Last, sondern zwischen beliebigen Zwischenwerten ausgeführt wird.

In Figur 1b sind Belastungszustände dieser Art in graphischer Form dargestellt.

Beim Auflegen einer Teillast F' (<Max) auf die Wägevorrichtung wird eine Belastungskurve 1' erzeugt, die am Umkehrpunkt U1 endet. Beim Wegnehmen dieser Teillast F' von der Wägevorrichtung und sofortigem Auflegen einer neuen, kleineren Teillast F'' wird die Entlastungskurve nicht auf Null, sondern zum Beispiel nur auf den Umkehrpunkt U2 zurückgehen, um dann, bewirkt durch die neue kleinere Teillast F'' wieder bis zum Umkehrpunkt U3 anzusteigen. Wird auch diese Teillast F'' entfernt, geht die Entlastungskurve 2'' auf Null zurück.

Es ist festzustellen, daß sich alle Belastungs- und Entlastungszustände innerhalb der bei Maximallast von den Kurven 1 und 2 gebildeten Hüllkurve abspielen.

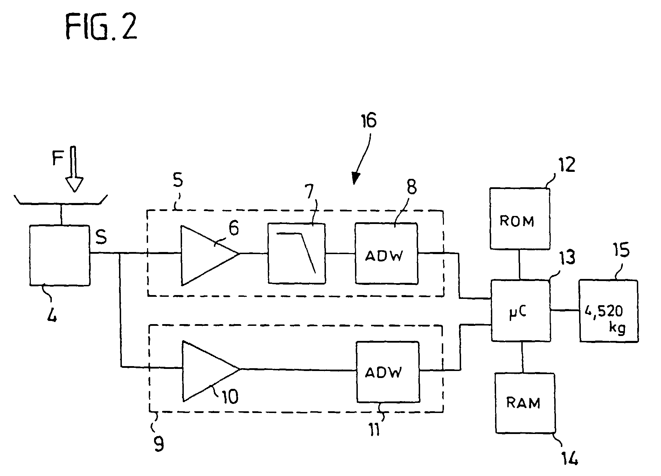

Figur 2 zeigt das Blockschaltbild einer kompletten Wägevorrichtung. Diese Wägevorrichtung besteht aus einem Kraftaufnehmer 4, der eine von der Kraft F abhängige analoge Meßgröße S ausgibt. Diese Meßgröße S wird an eine Schaltungseinrichtung 16 weitergeleitet und in zwei Prüfeinheiten (Kanäle) 5, 9 zur weiteren Verarbeitung eingespeist. Der erste Kanal 5 besteht aus einem Vorverstärker 6, einem Filter 7 sowie einem hochauflösenden, langsamen Analog-Digital-Wandler 8, der die Meßgröße S mit der erforderlichen Genauigkeit digitalisiert und diese digitale Information an die Recheneinheit (Microcontroller) 13 weitergibt. Parallel dazu gelangt die Meßgröße S in den zweiten Kanal 9, der aus einem breitbandigen Vorverstärker 10 mit sehr schneller Ansprechzeit und einem Analog-Digital-Wandler 11 geringer Auflösung, aber mit sehr hoher Wandlungsrate, besteht. Dieser "schnelle" Kanal 9 ist in der Lage, auch sehr schnelle Laständerungen (wie zum Beispiel Stöße) am Kraftaufnehmer 4 zu verarbeiten und an den Microcontroller 13 weiterzugeben. Der Microcontroller 13 ermittelt aus der Information des ersten Kanals 5 das Meßergebnis mit hoher Auflösung und benutzt die Information des zweiten Kanals 9 um festzustellen, auf welcher Be- oder Entlastungskurve der Lastzustand erreicht wurde. Mit beiden Informationen ist es möglich, mittels geeigneter, im Lesespeicher 12 und Datenspeicher 14 befindlicher Informationen und Verfahren der Hysteresefehler des Kraftaufnehmers 4 zu korrigieren und den fehlerfreien Gewichtswert zur digitalen Anzeige 15 weiterzuleiten.

Die für diese Korrektur notwendigen Informationen im Datenspeicher 14 sind für den jeweiligen Typ von Wägevorrichtungen unterschiedlich und werden beim Herstellungsprozeß der Wägevorrichtungen im Datenspeicher 14 gespeichert.

Bei den für die Korrektur benutzten Verfahren sind grundsätzlich zwei Ansätze möglich. Man kann zum einen versuchen, eine mathematische Approximation zu finden, die das Hystereseverhalten nachbildet und die für die Korrektur benutzt werden kann. Zum anderen ist es möglich, ein physikalisches Modell der Hysterese zu entwickeln und aus dieser Modellvorstellung ein Verfahren zur Korrektur der Hysterese abzuleiten. Ein solches Modell ist für die (magnetische) Hysterese von ferromagnetischen Stoffen bekannt (F. Preisach, Über die magnetische Nachwirkung, Zeitschrift für Physik, Band 94, Seite 277, 1935). Bei diesem Modell, das sich prinzipiell auch zur Beschreibung der hier besprochenen mechanischen Hysterese eignet, wird das hysteresebehaftete System durch ein Ensemble von Elementar-Hystereseelementen beschrieben. Dieses physikalische Modell hat den Vorteil, daß es sich leicht auf einem Microcontroller, wie etwa dem hier für die Wägevorrichtung verwendeten Microcontroller 13, implementieren läßt.

Eine weitere vorteilhafte Ausgestaltung der Erfindung besteht darin, einen Mikrocontroller 13 zu verwenden, in dem die Funktionsblöcke, also Kanal 9 mit Vorverstärker 10, Analog-Digitalwandler 11, Lesespeicher 12 und Datenspeicher 14, bereits integriert sind.

Des weiteren kann der digitale Teil (Zähler) des langsamen Analog-Digitalwandlers 8 zusätzlich im Mikrocontroller 13 integriert sein.

## Patentansprüche

1. Wägevorrichtung, insbesondere zur Verwendung in hochauflösenden Waagen, mit einem elastisch verformbaren Kraftaufnehmer (4), einer Sensoranordnung zur Umwandlung der aufgrund einer auf das Krafteinleitungsteil des Kraftaufnehmers wirkenden Kraft F hervorgerufenen Verformung desselben in ein elektrisches Wägesignal und mit einer Recheneinheit (12) zur Ermittlung eines um den Hysteresefehler des Kraftaufnehmers korrigierten Wägesignals, **dadurch gekennzeichnet**, daß die Sensoranordnung eine erste Prüfeinheit (5) zur hochaufgelösten Erfassung des Wägesignals und eine zweite Prüfeinheit (9) zur zeitlich hochaufgelösten Erfassung des Wägesignals umfaßt, wobei die Recheneinheit (13) anhand von von der zweiten Prüfeinheit (9) bereitgestellten Daten das hochaufgelöste Wägesignal der ersten Prüfeinheit (5) um den Hysteresefehler korrigiert.

2. Wägevorrichtung nach Anspruch 1, dadurch gekennzeichnet, daß die Sensoranordnung ein analoges Wägesignal erzeugt und daß die erste und zweite Prüfeinheit (5, 9) jeweils einen unabhängig voneinander arbeitenden Anslog-Digital-Wandler (8, 11) umfassen.

3. Wägevorrichtung nach einem der Ansprüche 1 und 2, dadurch gekennzeichnet, daß der Analog-Digital-Wandler (8) der ersten Prüfeinheit (5) eine Auflösung von 16 bis 20 bit und der Analog-Digital-Wandler (11) der zweiten Prüfeinheit eine Auflösung von mindestens 8 bit aufweist.

4. Wägevorrichtung nach einem der Ansprüche 2 und 3, dadurch gekennzeichnet, daß die Wandlungszeit des Analog-Digital-Wandlers (8) der ersten Prüfeinheit (5) ≤ 50 ms beträgt.

5. Wägevorrichtung nach einem der Ansprüche 2 bis 4, dadurch gekennzeichnet, daß die Wandlungszeit des Analog-Digital-Wandlers (11) der zweiten Prüfeinheit (9) $$le%% 50 µs beträgt.

6. Wägevorrichtung nach einem der Ansprüche 2 bis 5, dadurch gekennzeichnet, daß die zweite Prüfeinheit (9) einen Vorverstärker (10) umfaßt, welcher das der elastischen Verformung des Kraftaufnehmers entsprechende elektrische Signal verstärkt.

7. Wägevorrichtung nach Anspruch 6, dadurch gekennzeichnet, daß der Vorverstärker (10) und der Analog-DigitalWandler (11) der zweiten Prüfeinheit in einem Schaltkreis integriert sind.

8. Wägevorrichtung nach Anspruch 7, dadurch gekennzeichnet, daß der integrierte Schaltkreis einen Datenspeicher (14), einen Lesespeicher (12) und die Recheneinheit (13) integriert enthält.

9. Wägevorrichtung nach Anspruch 7 oder 8, dadurch gekennzeichnet, daß der integrierte Schaltkreis den digitalen Teil des Analog-Digital-Wandlers (8) der ersten Prüfeinheit (5) integriert enthält.

## Claims

1. Weighing device, in particular for use in high-resolution scales, comprising an elastically deformable force transducer (4), a sensor arrangement for converting the deformation of the force transducer caused on account of a force F acting on the force input section of the force transducer into an electrical weighing signal, and a processing unit (13) for calculating a weighing signal corrected by the hysteresis error of the force transducer, characterized in that the sensor arrangement comprises a first measuring unit (5) for the high-resolution determination of the weighing signal and a second measuring unit (9) for the determination of the weighing signal in small time increments (high time resolution), and the processing unit (13) corrects the high-resolution weighing signal of the first measuring unit (5) by the hysteresis error on the basis of data made available by the second measuring unit (9).

2. Weighing device as defined in claim 1, characterized in that the sensor arrangement generates an analogue weighing signal, and that the first and second measuring units (5, 9) each comprise an analogue-digital converter (8, 11) operating independently of one another.

3. Weighing device as defined in one of claims 1 and 2, characterized in that the analogue-digital converter (8) of the first measuring unit (5) has a resolution of 16 to 20 bits and the analogue-digital converter (11) of the second measuring unit a resolution of at least 8 bits.

4. Weighing device as defined in one of claims 2 and 3, characterized in that the conversion time of the analogue-digital converter (8) of the first measuring unit (5) is $$le%% 50 ms.

5. Weighing device as defined in any one of claims 2 to 4, characterized in that the conversion time of the analogue-digital converter (11) of the second measuring unit (9) is $$le%% 50 µs.

6. Weighing device as defined in any one of claims 2 to 5, characterized in that the second measuring unit (9) comprises a preamplifier (10) amplifying the electrical signal corresponding to the elastic deformation of the force transducer.

7. Weighing device as defined in claim 6, characterized in that the preamplifier (10) and the analogue-digital converter (11) of the second measuring unit are integrated in a circuit.

8. Weighing device as defined in claim 7, characterized in that the integrated circuit includes a data memory (14), a read memory (12) and the processing unit (13) integrated therein.

9. Weighing device as defined in claim 7 or 8, characterized in that the integrated circuit includes the digital section of the analogue-digital converter (8) of the first measuring unit (5) integrated therein.

## Revendications

1. Dispositif de pesée en particulier pour l'utilisation dans des balances à haute résolution, comportant un transducteur de force (4) déformable élastiquement, un agencement de capteur en vue de la conversion de la déformation de ce dernier provoquée par une force F s'exerçant sur l'élément d'introduction de force du transducteur de force en un signal de pesée électrique et une unité de calcul (12) en vue de la détermination d'un signal de pesée à erreur d'hystérésis corrigée du transducteur de force, caractérisé en ce que l'agencement de capteur comprend une première unité de vérification (5) en vue de la détection à haute résolution du signal de pesée et une seconde unité de vérification (9) en vue de la détection du signal de pesée à haute résolution temporaire, l'unité de calcul (13) corrigeant l'erreur d'hystérésis du signal de pesée à haute résolution de la première unité de vérification (5) à l'aide de données obtenues par la seconde unité de vérification (9).

2. Dispositif de pesée selon la revendication 1, caractérisé en ce que l'agencement de capteur génère un signal de pesée analogique et en ce que la première et la seconde unités de vérification (5, 9) comprennent chacune un convertisseur analogique-numérique (8, 11), lesquels travaillent indépendamment l'un de l'autre.

3. Dispositif de pesée selon l'une quelconque des revendications 1 et 2, caractérisé en ce que le convertisseur analogique-numérique (8) de la première unité de vérification (5) présente une résolution de 16 à 20 bits et le convertisseur analogique-numérique (11) de la seconde unité de vérification présente une résolution d'au moins 8 bits.

4. Dispositif de pesée selon l'une quelconque des revendications 2 et 3, caractérisé en ce que le temps de conversion du convertisseur analogique-numérique (8) de la première unité de vérification (5) s'élève à $$le%% 50 ms.

5. Dispositif de pesée selon l'une quelconque des revendications 2 à 4, caractérisé en ce que le temps de conversion du convertisseur analogique-numérique (11) de la seconde unité de vérification (9) s'élève à $$le%% 50 µs.

6. Dispositif de pesée selon l'une quelconque des revendications 2 à 5, caractérisé en ce que la seconde unité de vérification (9) comprend un préamplificateur (10) qui amplifie le signal électrique correspondant à la déformation élastique du transducteur de force.

7. Dispositif de pesée selon la revendication 6, caractérisé en ce que le préamplificateur (10) et le convertisseur analogique-numérique (11) de la seconde unité de vérification sont intégrés dans un circuit.

8. Dispositif de pesée selon la revendication 7, caractérisé en ce que le circuit intégré contient, intégrées, une mémoire de données (14), une mémoire de lecture (12) et l'unité de calcul (13).

9. Dispositif de pesée selon la revendication 7 ou 8, caractérisé en ce que le circuit intégré contient, intégrée, la partie numérique du convertisseur analogique-numérique (8) de la première unité de vérification (5).
